# EUROPEAN PATENT SPECIFICATION

(11) **EP 3 340 485 B1**
(45) Date of publication and mention of the grant of the patent: **19.08.2020**
(21) Application number: 16789090.4
(22) Date of filing: 10.03.2016
(51) Int. Cl.: H04B 7/04, H04B 7/08, H04B 7/0413

(54) **ANTENNA RECEIVING METHOD AND DEVICE IN LARGE-SCALE MULTIPLE-INPUT MULTIPLE-OUTPUT SYSTEM**
ANTENNENEMPFANGSVERFAHREN UND -VORRICHTUNG IN EINEM GROSS DIMENSIONIERTEN MIMO-SYSTEM
PROCÉDÉ ET DISPOSITIF DE RÉCEPTION D'ANTENNE DANS UN SYSTÈME À ENTRÉES MULTIPLES ET SORTIES MULTIPLES À GRANDE ÉCHELLE

(30) Priority: 28.09.2015 CN 201510627387
(43) Date of publication of application: 27.06.2018
(73) Proprietor: ZTE Corporation, Shenzhen, Guangdong 518057 (CN)
(72) Inventor: ZHANG, Yujie, Shenzhen Guangdong 518057 (CN); SONG, Lianpo, Shenzhen Guangdong 518057 (CN); LI, Gang, Shenzhen Guangdong 518057 (CN)
(74) Representative: Krauns, Christian
(86) International application number: PCT/CN2016/076073
(87) International publication number: WO 2016/177096

(56) References cited:
- EP-A2- 1 077 538
- CN-A- 1 759 617
- CN-A- 101 015 138
- CN-A- 101 350 647
- CN-A- 103 236 970
- US-A1- 2007 142 089
- US-A1- 2013 286 960
- US-B1- 7 339 979

## Description

### TECHNICAL FIELD

The present disclosure relates to the technical field of radio communication, in particular, to an antenna receiving method and device in a massive multiple-input multiple-output system.

### BACKGROUND

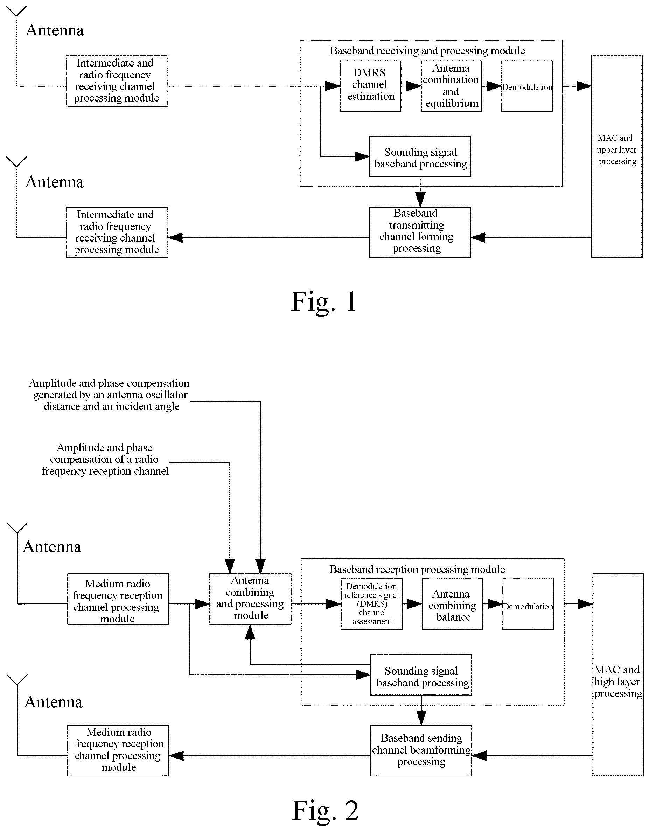

In a receiver system of emerging massive multiple-input multiple-output on the LTE (Long Term Evolution) physical layer technical platform, there are a large number of receiving antennas. An antenna receiving device in the existing massive multiple-input multiple-output system is shown in Fig. 1. As shown in Fig. 1, an intermediate and radio frequency processing module is connected with a baseband receiving and processing module, the intermediate and radio frequency processing module receives radio frequency signals through multiple antennas, and transmits the radio frequency signals to the baseband receiving and processing module; and the baseband receiving and processing module processes the radio frequency signals. The processing may include performing a MRC (Maximum Ratio Combining) antenna combination in the baseband processing module by weighting a pilot DMRS (De Modulation Reference Signal) channel estimation H to obtain a sufficiently high MRC gain.

However, although more receiving antennas can theoretically bring more receiving gain, the large number of receiving antennas also bring tremendous computations to baseband processing. Throughout the entire receiver, using DMRS for channel estimation and combination has accounted for more than half of processing resources of the total receiver system. For example, in this field, the configuration of more than 64 antenna channels is generally referred to as a massive multiple-input multiple-output antenna system, and demodulation of 64 antenna channels is a big challenge for a baseband processor DSP (Digital Signal Processor), and at the same time the demand for an interface rate of the baseband processor is huge. Nearly 64Gbps transmission capacity is required for transmission links entering into the baseband. As a result, the baseband processing chip DSP cannot receive or demodulate all antenna channels due to limited resources.

US2007142089 disclose an array receiver which uses multiuser information in signals received from a plurality of transmitting users, preprocesses samples of antenna signals from the antenna elements to from basis signals together. The receiver processes and combines the basis signals to produce sets of estimated received signal, each for a corresponding one of the users. Each of the basis signals comprises a different combination of the antenna signals. The receiver combines the basis signals to provide a user-specific output signal, and periodically updates parameters of the filters used for deriving each particular basis signal. Further relevant technologies are also known from US7339979B1 (KELKAR KRIS [US]) 4 March 2008 (2008-03-04) which relates to adaptive beamforming methods and system that enhance performance and reduce computations, EP1077538A2 (HUGHES ELECTRONICS CORP [US]) 21 February 2001 (2001-02-21) which relates to signal processing circuit for communicating with a modular mobile satellite terminal and method therefor, and US2013/286960A1 (LI YING [US] ET AL) 31 October 2013 (2013-10-31) which relates to apparatus and method for control channel beam management in a wireless system with a large number antennas.

### SUMMARY

Embodiments of the present disclosure provide an antenna receiving method and device in a massive multiple-input multiple-output system, which are used for solving the problem in the related art that the baseband processing chip DSP cannot receive or demodulate all antenna channels due to limited resources.

Embodiments of the present disclosure provide the following technical solutions.

According to a first aspect, an embodiment of the present disclosure provides an antenna receiving method as set out in claim 1. Preferred features are set out in dependent claims 2 to 6.

According to a second aspect, an embodiment of the present disclosure also provides an antenna receiving device as set out in claim 7 Preferred features are set out in claims 8 to 10.

The embodiments of the present disclosure have the following advantageous effects.

In the embodiments of the present disclosure, the antenna combining and processing module is added between the intermediate and radio frequency processing module and the baseband receiving and processing module. After the intermediate and radio frequency processing module receives a radio frequency signal via a plurality of antennas, the antenna combining and processing module combines a plurality of antenna channels, and transmits via the combined antenna channels a baseband signal to the baseband receiving and processing module for processing. The embodiments of the present disclosure can reduce the complexity of the baseband receiving system and the computation volume of the baseband process, and thereby the baseband processing chip DSP can receive or demodulate all antenna channels.

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

### BRIEF DESCRIPTION OF THE DRAWINGS

Fig. 1 is a schematic diagram showing a structure of an antenna receiving device in a massive multiple-input multiple-output system in the related art; and
Fig. 2 is a schematic diagram showing a structure of an antenna receiving device in a massive multiple-input multiple-output system according to an embodiment of the present disclosure.

### DETAILED DESCRIPTION

In order to solve the problem in the related art that the baseband processing chip DSP cannot receive or demodulate all antenna channels due to limited resources, the present disclosure provides an antenna receiving method and device in a massive multiple-input multiple-output system. The technical solutions of the present disclosure will be described below in detail with reference to drawings and embodiments. It should be understood that the embodiments described herein are only used for explaining the technical solutions of the present disclosure, but are not intended to limit the protection scope of the present disclosure.

### First Embodiment

An antenna receiving device in a massive multiple-input multiple-output system provided by an embodiment of the present disclosure is shown in Fig. 2. The device includes: an intermediate and radio frequency processing module, an antenna combining and processing module, and a baseband receiving and processing module. The antenna combining and processing module is connected with the intermediate and radio frequency processing module and the baseband receiving and processing module. The intermediate and radio frequency processing module is configured to receive a radio frequency signal via a plurality of antennas. The antenna combining and processing module is configured to combine a plurality of antenna channels, and transmit, via the combined antenna channels, a baseband frequency domain signal to the baseband receiving and processing module. The baseband receiving and processing module is configured to process the baseband frequency domain signal transmitted from the antenna combining and processing module.

In the embodiment, the antenna combining and processing module includes an amplitude and phase error compensation submodule which is configured to compensate an amplitude and phase error generated in a radio frequency channel and/or an amplitude and phase error generated due to a distance of antenna elements and an incident angle. The antenna combining and processing module further includes a sounding signal compensation factor compensation submodule which is configured to perform compensation by using a sounding signal compensation factor which is generated according to a channel estimation of a sounding signal received in an uplink direction. The sounding signal compensation factor and a channel estimation value of the sounding signal are conjugate.

In the embodiment, an antenna combining and processing module is added between the existing intermediate and radio frequency processing module and the baseband receiving and processing module. The antenna combining and processing module does not need to conduct too complicated computations, and instead only needs to multiply the received data by some amplitude and phase compensation factors. Further, in order to increase the combination gain of the antenna combining and processing module, the compensation factor, which is calculated according to a channel estimation value of an uplink sounding signal, is returned back to the antenna combining and processing module.

Because there is no need for the antenna combining and processing module to obtain complicated scheduling parameters and conduct complicated matrix computations, the antenna combining and processing module may be implemented by chips like FPGA (Field-Programmable Gate Array). The DMRS channel estimation and MRC antenna combination and balancing process in the baseband receiving and processing module involve in complicated parameters scheduling and large volume of matrix computations, and a high speed processor like DSP is used as the baseband receiving and processing module in practical system.

It is improper for the present disclosure to perform an estimation using the DMRS signal for each channel during the stage at the antenna combining and processing module, because this involves in a large computation volume, and needs real-time obtaining of the DMRS scheduling information and parameters, and DMRS channel estimation for all channels and all users in accordance with the scheduling information and parameters. Such solution is much more complicated than the solutions proposed in the present disclosure.

### Second Embodiment

When the antenna receiving device in the massive multiple-input multiple-output system according to the embodiment is employed, an antenna receiving method in the massive multiple-input multiple-output system according to the present embodiment is as follows. First, the intermediate and radio frequency processing module receives a radio frequency signal via a plurality of antennas. Then, the antenna combining and processing module combines a plurality of antenna channels, and transmits, via the combined antenna channels, a baseband frequency domain signal to the baseband receiving and processing module. Finally, the baseband receiving and processing module processes the baseband frequency domain signal transmitted from the antenna combining and processing module.

In the massive multiple-input multiple-output system, the arrangement array of the antennas usually has two dimensions, including a vertical dimension and a horizontal dimension. In the embodiment, the plurality of antennas are arranged in an antenna array which forms an M^{∗}N matrix, where M represents the vertical dimension of the antennas, and N represents the horizontal dimension of the antennas. The step of combining the plurality of antenna channels includes: combining the M^{∗}N matrix into a K^{∗}L matrix, where K represents the vertical dimension of the antennas, K<=M; and L represents the horizontal dimension of the antennas, L<=N. For example, for a combination in the vertical dimension, the antenna array may be formed as one 1^{∗}N matrix; and for a combination in the horizontal dimension, the antenna array may be formed as one M^{∗}1 matrix.

When performing the combination, an antenna combination pattern may be selected depending on an application scenario. In a scenario of a narrow beamwidth in a horizontal direction, a horizontal combination pattern is selected; and in a scenario of a wide coverage, a vertical combination pattern is selected. In the embodiment, for example, for a massive multiple-input multiple-output receiver system (M=4, N=14), the antenna combining and processing module receives signals from 64 antennal channels, an input rate of at least 64Gbps is needed, and then different combinations are performed depending on different combination pattern configurations. In the embodiment, different antenna combination patterns are selected depending on different application scenarios. For example, for a high building coverage, the beamwidth in the horizontal direction is narrow, and the amplitude and phase error (deviation) of a channel in the horizontal direction is smaller than that in the vertical direction. Under such condition, the antenna combining and processing module may select the horizontal combination to achieve a relatively high gain. That is, N antenna channels in the same row may be combined, and then K^{∗}L antenna channels are outputted, where K=4 and L=1. That is, four antenna channels are transmitted to the baseband processing module. Then, the baseband processing module performs MRC combination or IRC combination for the four antennas. At this time, only a capability of 4Gbps is needed for the transmission links entering into the baseband. Alternatively, different from the high building coverage scenario, for a wide coverage scenario, four antennas combined into one in the vertical direction will be better for achieving a high gain. That is, M antenna channels in the same column are combined to output K^{∗}L antenna channels, where K=1 and L=16. That is, MRC combination or IRC combination for sixteen antennas is performed. At this time, only a capability of 16Gbps (gigabits per second) is needed for the transmission links entering the baseband.

In the embodiment, for example, the antenna combining and processing module combines the antenna channels in the vertical direction before entering into the baseband. For example, 4 vertical channels in 64 antenna channels are directly combined into one channel to form 16 baseband channels, and at this time, only a capability of 16Gbps is needed for the transmission links into the baseband.

During the combination, an amplitude and phase error generated in a radio frequency channel and/or an amplitude and phase distortion generated due to a distance between antenna elements and an incident angle may be compensated. In the embodiment, in order to realize alignment of amplitude and phase, the amplitude and phase error generated in a radio frequency channel needs to be compensated. Assuming that a compensation factor is A1, an amplitude and phase error generated due to a combination of different angles of signals arriving at the antenna elements and the distances between the antennas is compensated, and the resulted compensation factor is A2.

Amplitude and phase influences on channels over different carriers are different. Thus, during combination, the combination is performed in a granularity of a resource block (RB). Different RBs are weighted by different amplitude and phase compensation factors.

In order to increase a combination gain of the antenna combining and processing module, a sounding signal compensation factor A3 which is calculated according to a channel estimation H of the sounding signal received in the uplink direction is returned back to the antenna combining and processing module. The sounding signal compensation factor A3 is conjugate with a channel estimation value of the sounding signal. In the massive multiple-input multiple-output system, in order to obtain information of each antenna, the baseband separates the sounding receiving signals independently and does not combine the sounding receiving signals. Thus, each channel has a sounding signal compensation factor for each user, that is, there are M^{∗}N different A3 factor values. When the antenna combining and processing module performs the combination, the antenna combining and processing module multiplies relevant channels by corresponding compensation factors A3 and then performs the combination.

Meanwhile, before returning back of the sounding signal compensation factor, a decision on the sounding signal compensation factor may be made. For a channel having a very low power, the channel compensation factor may be directly set as zero. The compensation factors for some of the antenna channels may be set as 1, which equals to selection of the antennas. For near-point users, if the channel condition is very ideal, the compensation factor may be set as 1, that is, no compensation is performed so as to avoid degradation of the performance due to computation error of the compensation factor.

In the embodiment, for the RB of a certain user, the channel estimation H of the sounding of this user may be used for calculating the sounding signal compensation factor A3 to perform compensation. The implementation may be as follows.

The antenna combining and processing module determines whether there are space division paired users on an RB according to a scheduling parameter. If there are space division paired users on the RB, the compensation factors of the combined channels are determined as A1 and A2. If the RB is allocated for a single user, the compensation factors of the combined channels are determined as A1, A2 and A3.

The demodulation and processing module at the baseband receiving end sorts out the channel estimation information of the sounding on the RB of the non-space division paired users in the present frame, generates the sounding signal compensation factor A3, and delivers A3 to the antenna combining and processing module.

For the RB of the non-space division paired users, the antenna combining and processing module extracts the compensation factor A3 on the corresponding RB of the corresponding users, and compensates the signals received on the present RB.

The antenna combining and processing module performs combination of relevant compensation channels for the compensated RB, and transmits the combined signals to the demodulation and processing module at the baseband receiving end.

The present disclosure does not exclude other compensation parameters delivered to the antenna combining and processing module, for example, an amplitude and phase compensation factor of an active receiving channel for antenna calibration.

After processing of the antenna combining and processing module, IQ signals of the matrix dimension of K^{∗}L are transmitted to the baseband receiving and processing module. In the baseband receiving and processing module, channel estimation H is performed on the signals of the dimension of K^{∗}L, and then MRC (Maximum Ratio Combining) antenna combination is performed, and finally one or more flows of user data are demodulated evenly.

In the present disclosure, the antenna combining and processing module is added between the intermediate and radio frequency processing module and the baseband receiving and processing module. After the intermediate and radio frequency processing module receives a radio frequency signal via a plurality of antennas, the antenna combining and processing module combines a plurality of antenna channels, and transmits via the combined antenna channels the radio frequency signal to the baseband receiving and processing module for processing. The present disclosure can reduce the complexity of the baseband receiving system and the computation volume of the baseband process, and thereby the baseband processing chip DSP can receive or demodulate all antenna channels.

Although exemplary embodiments of the present disclosure are disclosed for illustrative purposes, one of ordinary skill in this art can appreciate that various improvements, addition, and replacements are also possible. Thus, the scope of the present disclosure is not limited to the above embodiments.

### Industrial Applicability

In the embodiments of the present disclosure, the antenna combining and processing module is added between the intermediate and radio frequency processing module and the baseband receiving and processing module. After the intermediate and radio frequency processing module receives a radio frequency signal via a plurality of antennas, the antenna combining and processing module combines a plurality of antenna channels, and transmits via the combined antenna channels a baseband frequency domain signal to the baseband receiving and processing module for processing. The present disclosure can reduce the complexity of the baseband receiving system and the computation volume of the baseband process, and thereby the baseband processing chip DSP can receive or demodulate all antenna channels.

## Claims

1. An antenna receiving method in a massive multiple-input multiple-output system, comprising:
A. receiving, by an intermediate and radio frequency processing module, a radio frequency signal via a plurality of antennas;
B. combining a plurality of antenna channels respectively corresponding to the plurality of antennas;
wherein the plurality of antennas are arranged in an antenna array which forms an M^{∗}N matrix, where M represents a vertical dimension of the antennas, N represents a horizontal dimension of the antennas,
wherein the step B comprises:
combining the M^{∗}N matrix into a K^{∗}L matrix, where K represents a vertical dimension of the antennas, K<=M; and L represents a horizontal dimension of the antennas, L<=N, and
wherein the step B further comprises: selecting an antenna combination pattern depending on an application scenario, the application scenario comprising a scenario of a narrow beamwidth in a horizontal direction and a scenario of a wide coverage; in the scenario of the narrow beamwidth in the horizontal direction, a horizontal combination pattern is selected; and in the scenario of the wide coverage, a vertical combination pattern is selected; and
C. transmitting, via the L^{∗}K combined antenna channels, a baseband signal to a baseband receiving and processing module for processing, wherein the baseband signal is of the matrix dimension K^{∗}L;
D. performing a I maximum ratio combining, MRC, or an I interference rejection combining, IRC, on the baseband signal of the K^{∗}L combined antenna channels.

2. The method according to claim 1, wherein the step B comprises: compensating an amplitude and phase error generated in a radio frequency channel and/or an amplitude and phase error generated due to a distance between antenna oscillators and an incident angle.

3. The method according to claim 2 wherein the step B further comprises: performing compensation by using a sounding signal compensation factor, wherein the performing compensation by using the sounding signal compensation factor comprises: generating a compensation factor according to a channel estimation of a sounding signal received in an uplink direction, and multiplying relevant channels by corresponding compensation factors.

4. The method according to claim 3, wherein the sounding signal compensation factor is conjugate with a channel estimation value of the sounding signal.

5. The method according to claim 3, wherein the step B further comprises: determining whether the compensation by using the sounding signal is needed according to a channel condition.

6. The method according to claim 1, wherein the step B comprises: performing combination in a granularity of a resource block.

7. An antenna receiving device in a massive multiple-input multiple-output system, comprising: an intermediate and radio frequency processing module, an antenna combining and processing module, and a baseband receiving and processing module, wherein the antenna combining and processing module is connected with the intermediate and radio frequency processing module and the baseband receiving and processing module; the intermediate and radio frequency processing module is configured to receive a radio frequency signal via a plurality of antennas; the antenna combining and processing module is configured to combine a plurality of antenna channels respectively corresponding to the plurality of antennas,
wherein the plurality of antennas are arranged in an antenna array which forms an M^{∗}N matrix, where M represents a vertical dimension of the antennas, N represents a horizontal dimension of the antennas,
wherein the antenna combining and processing module is configured to:
combine the M^{∗}N matrix into a K^{∗}L matrix, where K represents a vertical dimension of the antennas, K<=M; and L represents a horizontal dimension of the antennas, L<=N, and
wherein the antenna combining and processing module is further configured to: select an antenna combination pattern depending on an application scenario, the application scenario comprising a scenario of a narrow beamwidth in a horizontal direction and a scenario of a wide coverage; in the scenario of the narrow beamwidth in the horizontal direction, a horizontal combination pattern is selected; and in the scenario of the wide coverage, a vertical combination pattern is selected; and
wherein the antenna combining and processing module is further configured to: transmit, via the L^{∗}K combined antenna channels, a baseband signal to a baseband receiving and processing module for processing, wherein the baseband signal is of the matrix dimension K^{∗}L;
the baseband receiving and processing module is configured to process the baseband signal transmitted from the antenna combining and processing module;
wherein the baseband receiving and processing module is configured to: perform a maximum ratio combining, MRC, or an I interference rejection combining, IRC, on the baseband signal of the K^{∗}L combined antenna channels.

8. The device according to claim 7, wherein the antenna combining and processing module comprises: an amplitude and phase error compensation submodule which is configured to compensate an amplitude and phase error generated in a radio frequency channel and/or an amplitude and phase error generated due to a distance between antenna elements and an incident angle.

9. The device according to claim 8, wherein the antenna combining and processing module further comprises: a sounding signal compensation factor compensation submodule which is configured to perform compensation by using a sounding signal compensation factor that is generated according to a channel estimation of a sounding signal received in an uplink direction.

10. The device according to claim 9, wherein the sounding signal compensation factor is conjugate with a channel estimation value of the sounding signal.

## Patentansprüche

1. Verfahren für einen Antennenempfang in einem System mit einer massiven Mehrfach-Eingabe und einer massiven Mehrfach-Ausgabe, wobei das Verfahren umfasst:
A. ein Empfangen eines Hochfrequenzsignals durch ein Modul für Verarbeitung von Zwischenfrequenzen und Hochfrequenzen über eine Vielzahl an Antennen;
B. ein Kombinieren einer Vielzahl an Antennenkanälen, die jeweils der Vielzahl der Antennen entsprechen;
wobei die Vielzahl der Antennen in einer Antennenanordnung angeordnet sind, die eine M^{∗}N-Matrix bildet, wobei das M eine vertikale Abmessung der Antennen darstellt und wobei das N eine horizontale Abmessung der Antennen darstellt,
wobei der Schritt B umfasst:
ein Kombinieren der M^{∗}N-Matrix zu einer K^{∗}L-Matrix, wobei das K eine vertikale Dimension der Antennen darstellt, bei der K <= M ist; und wobei das L eine horizontale Abmessung der Antennen darstellt, bei der L <= N ist, und
wobei der Schritt B ferner umfasst:
ein Auswählen eines Musters einer Antennenkombination in Abhängigkeit von einem Anwendungsszenario, wobei das Anwendungsszenario ein Szenario einer schmalen Strahlbreite in einer horizontalen Richtung und ein Szenario einer breiten Abdeckung umfasst; wobei in dem Szenario der schmalen Strahlbreite in der horizontalen Richtung ein horizontales Muster der Kombination ausgewählt wird, und wobei in dem Szenario der breiten Abdeckung ein vertikale Musters der Kombination ausgewählt wird, und
C. ein Übertragen eines Basisbandsignals über die kombinierten L^{∗}K Antennenkanäle an ein Modul für Basisbandempfang und Verarbeitung, um es zu verarbeiten, wobei das Basisbandsignal die Matrixdimension K^{∗}L aufweist;
D. ein Durchführen eines Kombinierens mit einem maximalen Verhältnis, MRC, oder eines Kombinierens mit einer Interferenzunterdrückung, IRC, für das Basisbandsignal der kombinierten K^{∗}L Antennenkanäle.

2. Verfahren nach Anspruch 1, wobei der Schritt B umfasst: ein Kompensieren eines Amplituden- und Phasenfehlers, der in einem Hochfrequenzkanal erzeugt worden ist, und / oder eines Amplituden- und Phasenfehlers, der aufgrund eines Abstands zwischen Antennenoszillatoren und eines Einfallswinkels erzeugt worden ist.

3. Verfahren nach Anspruch 2, wobei der Schritt B ferner umfasst: ein Durchführen einer Kompensation mittels eines Kompensationsfaktors eines akustischen Signals, wobei das Durchführen einer Kompensation mittels des Kompensationsfaktors des akustischen Signals umfasst: ein Erzeugen eines Kompensationsfaktors gemäß einer Kanalschätzung von einem akustischen Signal, das in einer Uplink-Richtung empfangen worden ist, und ein Multiplizieren relevanter Kanäle mit entsprechenden Kompensationsfaktoren.

4. Verfahren nach Anspruch 3, wobei der Kompensationsfaktor des akustischen Signals mit einem Kanalschätzwert des akustischen Signals konjugiert ist.

5. Verfahren nach Anspruch 3, wobei der Schritt B ferner umfasst: ein Bestimmen, ob die Kompensation mittels des akustischen Signals gemäß einer Kanalbedingung benötigt wird.

6. Verfahren nach Anspruch 1, wobei der Schritt B umfasst: ein Durchführen einer Kombination in einer Granularität eines Ressourcenblocks.

7. Vorrichtung für einen Antennenempfang in einem System mit einer massiven Mehrfach-Eingabe und einer massiven Mehrfach-Ausgabe, wobei die Vorrichtung aufweist:
ein Modul für Verarbeitung von Zwischenfrequenzen und Hochfrequenzen,
ein Modul für Antennenkombination und Verarbeitung, und
ein Modul für Basisbandempfang und Verarbeitung,
wobei das Modul für Antennenkombination und Verarbeitung mit dem Modul für Verarbeitung von Zwischenfrequenzen und Hochfrequenzen und dem Modul für Basisbandempfang und Verarbeitung verbunden ist; wobei das Modul für Verarbeitung von Zwischenfrequenzen und Hochfrequenzen ausgestaltet ist, um ein Hochfrequenzsignal über eine Vielzahl an Antennen zu empfangen; wobei das Modul für Antennenkombination und Verarbeitung ausgestaltet ist, um eine Vielzahl an Antennenkanälen zu kombinieren, die jeweils der Vielzahl der Antennen entsprechen;
wobei die Vielzahl der Antennen in einer Antennenanordnung angeordnet sind, die eine M^{∗}N-Matrix bildet, wobei das M eine vertikale Abmessung der Antennen darstellt und das N eine horizontale Abmessung der Antennen darstellt,
wobei das Modul für Antennenkombination und Verarbeitung ausgestaltet ist, um:
die M^{∗}N-Matrix zu einer K^{∗}L-Matrix zu kombinieren, wobei das K eine vertikale Abmessung der Antennen darstellt, bei der K <= M ist; und wobei das L eine horizontale Abmessung der Antennen darstellt, bei der L <= N ist; und
wobei das Modul für Antennenkombination und Verarbeitung ferner ausgestaltet ist, um:
ein Muster einer Antennenkombination in Abhängigkeit von einem Anwendungsszenario auszuwählen, wobei das Anwendungsszenario ein Szenario einer schmalen Strahlbreite in einer horizontalen Richtung und ein Szenario einer breiten Abdeckung umfasst; wobei in dem Szenario der schmalen Strahlbreite in der horizontalen Richtung ein horizontales Muster der Kombination ausgewählt worden ist; und wobei in dem Szenario der breiten Abdeckung ein vertikales Muster der Kombination ausgewählt worden ist; und
wobei das Modul für Antennenkombination und Verarbeitung ferner ausgestaltet ist, um:
über die kombinierten L^{∗}K Antennenkanäle ein Basisbandsignal an ein Modul für Basisbandempfang und Verarbeitung zu senden, um es zu verarbeiten, wobei die Vielzahl der Antennen in einer Antennenanordnung angeordnet sind, die eine M^{∗}N-Matrix bildet, wobei das Basisbandsignal die Matrixdimension K^{∗}L hat;
wobei das Modul für Basisbandempfang und Verarbeitung ausgestaltet ist, um das Basisbandsignal, das von dem Modul für Antennenkombination und Verarbeitung übertragen worden ist, zu verarbeiten.
wobei das Modul für Basisbandempfang und Verarbeitung ausgestaltet ist, um: ein Kombinieren mit einem maximalen Verhältnis, MRC, oder ein Kombinieren mit einer Interferenzunterdrückung, IRC, für das Basisbandsignal der kombinierten K^{∗}L Antennenkanäle durchzuführen.

8. Vorrichtung nach Anspruch 7, wobei das Modul für Antennenkombination und Verarbeitung aufweist: ein Submodul für Amplituden- und Phasenfehlerkompensation, das ausgestaltet ist, um einen in einem Hochfrequenzkanal erzeugten Amplituden- und Phasenfehler und / oder einen Amplituden- und Phasenfehler zu kompensieren, der aufgrund eines Abstands zwischen Antennenelementen und eines Einfallswinkels erzeugt worden ist.

9. Vorrichtung nach Anspruch 8, wobei das Modul für Antennenkombination und Verarbeitung ferner aufweist: ein Submodul zur Kompensation eines Kompensationsfaktors eines akustischen Signals, das ausgestaltet ist, um eine Kompensation mittels eines Kompensationsfaktors des akustischen Signals, der gemäß einer Kanalschätzung des akustischen Signals, das in Uplink-Richtung empfangen wird, erzeugt wird, durchzuführen.

10. Vorrichtung nach Anspruch 9, wobei der Kompensationsfaktor des akustischen Signals mit einem Kanalschätzwert des akustischen Signals konjugiert ist.

## Revendications

1. Procédé de réception d'antenne dans un système à entrées multiples et sorties multiples massif comprenant :
A. la réception, par un module de traitement de fréquence intermédiaire et radiofréquence, d'un signal radiofréquence via une pluralité d'antennes ;
B. la combinaison d'une pluralité de canaux d'antenne correspondant respectivement à la pluralité d'antennes ;
dans lequel la pluralité d'antennes est disposée dans un réseau d'antennes qui forme une matrice M^{∗}N, où M représente une dimension verticale des antennes, N représente une dimension horizontale des antennes,
dans lequel l'étape B comprend :
la combinaison de la matrice M^{∗}N en une matrice K^{∗}L, où K représente une dimension verticale des antennes, K<=M ; et L représente une dimension horizontale des antennes, L<=N, et
dans lequel l'étape B comprend en outre : la sélection d'un motif de combinaison d'antennes selon un scénario d'application, le scénario d'application comprenant un scénario d'une largeur de faisceau étroite dans une direction horizontale et un scénario d'une couverture large ; dans le scénario de largeur de faisceau étroite dans la direction horizontale, un motif de combinaison horizontale est choisi ; et dans le scénario de couverture large, un motif de combinaison verticale est choisi ; et
C. la transmission, via les canaux d'antenne combinés L^{∗}K, d'un signal en bande de base à un module de réception et de traitement en bande de base pour son traitement, dans lequel le signal en bande de base est de la dimension de matrice K^{∗}L ;
D. la réalisation d'une combinaison de rapport maximal, MRC, ou d'une combinaison de rejet d'interférence, IRC, sur le signal en bande de base des canaux d'antenne combinés K^{∗}L.

2. Procédé selon la revendication 1, dans lequel l'étape B comprend : la compensation d'une erreur d'amplitude et de phase générée dans un canal de radiofréquence et/ou d'une erreur d'amplitude et de phase générée en raison d'une distance entre des oscillateurs d'antenne et un angle d'incidence.

3. Procédé selon la revendication 2 dans lequel l'étape B comprend en outre : la réalisation de la compensation par l'utilisation d'un facteur de compensation de signal sonore, dans lequel la réalisation de la compensation par l'utilisation du facteur de compensation de signal sonore comprend : la génération d'un facteur de compensation en fonction d'une estimation de canal d'un signal sonore reçu dans une direction de liaison montante, et la multiplication des canaux concernés par les facteurs de compensation correspondants.

4. Procédé selon la revendication 3, dans lequel le facteur de compensation de signal sonore est conjugué avec une valeur d'estimation de canal du signal sonore.

5. Procédé selon la revendication 3, dans lequel l'étape B comprend en outre : la détermination de la nécessité, en fonction d'une condition de canal, de la compensation par l'utilisation du signal sonore.

6. Procédé selon la revendication 1, dans lequel l'étape B comprend : la réalisation de la combinaison dans une granularité d'un bloc de ressources.

7. Dispositif de réception d'antenne dans un système à entrées multiples et sorties multiples massif comprenant : un module de traitement de fréquence intermédiaire et radiofréquence, un module de combinaison et de traitement d'antennes, et un module de réception et traitement en bande de base, dans lequel le module de combinaison et de traitement d'antennes est connecté avec le module de traitement de fréquence intermédiaire et radiofréquence et le module de réception et traitement en bande de base ; le module de traitement de fréquence intermédiaire et radiofréquence est configuré pour recevoir un signal de radiofréquence via une pluralité d'antennes ; le module de combinaison et de traitement d'antennes est configuré pour combiner une pluralité de canaux d'antenne correspondant respectivement à la pluralité d'antennes,
dans lequel la pluralité d'antennes est disposée dans un réseau d'antennes qui forme une matrice M^{∗}N, où M représente une dimension verticale des antennes, N représente une dimension horizontale des antennes,
dans lequel le module de combinaison et de traitement d'antennes est configuré pour :
combiner la matrice M^{∗}N en une matrice K^{∗}L, où K représente une dimension verticale des antennes, K<=M ; et L représente une dimension horizontale des antennes, L<=N, et
dans lequel le module de combinaison et de traitement d'antennes est en outre configuré pour :
sélectionner un motif de combinaison d'antennes selon un scénario d'application, le scénario d'application comprenant un scénario d'une largeur de faisceau étroite dans une direction horizontale et un scénario d'une couverture large ; dans le scénario de largeur de faisceau étroite dans la direction horizontale, un motif de combinaison horizontale est choisi ; et dans le scénario de la couverture large, un motif de combinaison verticale est choisi ; et
dans lequel le module de combinaison et de traitement d'antennes est en outre configuré pour :
transmettre, via les canaux d'antenne combinés L^{∗}K, un signal en bande de base à un module de réception et de traitement en bande de base pour son traitement, dans lequel le signal en bande de base est de la dimension de matrice K^{∗}L ;
le module de réception et de traitement en bande de base est configuré pour traiter le signal en bande de base transmis depuis le module de combinaison et de traitement d'antennes ;
le module de réception et de traitement en bande de base est configuré pour : réaliser une combinaison de rapport maximal, MRC, ou une combinaison de rejet d'interférence, IRC, sur le signal en bande de base des canaux d'antenne combinés K^{∗}L.

8. Dispositif selon la revendication 7, dans lequel le module de combinaison et de traitement d'antennes comprend : un sous-module de compensation d'erreur d'amplitude et de phase qui est configuré pour compenser une erreur d'amplitude et de phase générée dans un canal de radiofréquence et/ou une erreur d'amplitude et de phase générée en raison d'une distance entre des éléments d'antenne et un angle d'incidence.

9. Dispositif selon la revendication 8, dans lequel le module de combinaison et de traitement d'antennes comprend en outre : un sous-module de compensation de signal sonore par facteur de compensation qui est configuré pour réaliser une compensation par l'utilisation d'un facteur de compensation de signal sonore qui est généré en fonction d'une estimation de canal d'un signal sonore reçu dans une direction de liaison montante.

10. Dispositif selon la revendication 9, dans lequel le facteur de compensation de signal sonore est conjugué avec une valeur d'estimation de canal du signal sonore.
